(19) Europäisches Patentamt
European Patent Office
Office européen des brevets

(11) EP 0 516 016 B1

(12) **EUROPÄISCHE PATENTSCHRIFT**

(45) Veröffentlichungstag und Bekanntmachung des Hinweises auf die Patenterteilung:
**26.03.1997 Patentblatt 1997/13**

(51) Int Cl.$^6$: **C08G 63/80**, C08G 63/02

(21) Anmeldenummer: **92108786.2**

(22) Anmeldetag: **25.05.1992**

(54) **Verfahren zur Herstellung von hochmolekularem linearem Polyester**
Process for the preparation of a high molecular weight, linear polyester
Procédé de préparation d'un polyester linéaire à haut poids moléculaire

(84) Benannte Vertragsstaaten:
**DE FR GB IT NL**

(30) Priorität: **31.05.1991 DE 4117825**

(43) Veröffentlichungstag der Anmeldung:
**02.12.1992 Patentblatt 1992/49**

(73) Patentinhaber: **HOECHST AKTIENGESELLSCHAFT**
**65926 Frankfurt am Main (DE)**

(72) Erfinder:
- **Weisskopf, Klaus, Dr.**
  **W-6200 Wiesbaden (DE)**
- **Dominguez, Ligia, Dr.**
  **W-6500 Mainz (DE)**
- **Klein, Peter, Dr.**
  **W-6200 Wiesbaden (DE)**

(56) Entgegenhaltungen:
**EP-A- 0 207 856**
**EP-A- 0 212 862**
**EP-A- 0 220 737**

- **CHEMICAL ABSTRACTS, Band 78, Nr. 18, 7. Mai 1973, Seite 36, Spalte 1, Zusammenfassung Nr. 112233v, Columbus, Ohio, US; & JP-A-72 32 089 (TORAY INDUSTRIES, INC.) 14-11-1972**
- **DATABASE WPIL, AN=85-220420 (36), Derwent Publications Ltd, London, GB; & JP-A-60 141 720 (MITSUBISHI RAYON K.K.) 26-07-1985**
- **DATABASE WPIL, AN=88-152739 (22), Derwent Publications Ltd, London, GB; & JP-A-63 095 224 (SUMITOMO CHEM. INC. K.K.) 26-04-1988**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 516 016 B1

## Beschreibung

Die vorliegende Erfindung betrifft ein Verfahren zur Herstellung von hochmolekularen, linearen Polyestern durch Nachkondensation einer Suspension eines festen, feinteiligen Polyesters geringeren Molekulargewichts bei erhöhter Temperatur in einem flüssigen Wärmeübertragungsmittel.

Hochmolekulare Polyester stellen wertvolle Ausgangsmaterialien zur Herstellung von geformten Materialien, insbesondere zur Herstellung von Fasern dar, wobei die unter bestimmten Herstellungsbedingungen erzielbare Festigkeit der Materialien in der Regel umso höher ist, je höher das Molekulargewicht des Polyesters ist. So ist es beispielsweise notwendig, um Polyesterfäden mit höchsten Festigkeiten zu erhalten, Polyester mit sehr hohen Molekulargewichten zum Verspinnen einzusetzen, ggf. in Kombination mit dem Einsatz neuer Spinnverfahren. Beispiele hierfür finden sich in den japanischen Patentschriften 61-207616, 62-263317 der japanischen Offenlegungschrift 22 33 33/1987 und den europäischen Patentanmeldungen 251 313 und 359 692.
Es bestand daher seit langem das Bedürfnis nach möglichst hochmolekularen Polyestermaterialien und die vielfältigen Versuche, die in dieser Richtung unternommen wurden, belegen das ständige Streben, dieses Ziel zu erreichen.

Hochmolekulare Polyester werden in der Technik häufig in der Weise hergestellt, daß in der Schmelze durch Umesterung oder Veresterung hergestellte Polyester mit relativ niedrigerem Molekulargewicht einer Festphasenkondensation unterworfen werden. Dabei werden die Polyesterteilchen, in der Regel Granulate, im Inertgasstrom oder im Vakuum auf eine Temperatur unterhalb ihrer Schmelztemperatur erwärmt. Bei dieser Behandlung erfolgt eine Weiterkondensation unter Erhöhung des Molekulargewichts und flüchtige Komponenten, die sich bei der Kondensation in festen Phase bilden, werden entfernt. Dieser Prozeß wird jedoch durch die parallel ablaufende, zunehmende Kristallisation des Polyesters und die damit immer langsamer verlaufende Diffusion der flüchtigen Komponenten durch das Polyesterteilchen behindert. Schließlich gewinnen bei den angewendeten hohen Temperaturen auch Abbaureaktionen zunehmend an Bedeutung, so daß das erreichbare Molekulargewicht begrenzt ist. Nimmt man als Maß für das Molekulargewicht den IV-Wert (Intrinsic-Viscosity) so läßt sich z.B. in der Praxis ausgehend von üblichen Polyethylenterephthalat-Chips durch herkömmliche, im technischen Maßstab ausgeführte Festphasenkondensation lediglich ein IV-Wert bis ca. 1,0 dl/g erreichen.

Ein Vorschlag zur Herstellung von hochmolekularem Polyester mit höheren IV-Werten als etwa 1,0 dl/g durch Festphasenkondensation ist der europäischen Patentanmeldung 0 335 819 zu entnehmen. Dort wird vorgeschlagen, einen zunächst noch relativ niedermolekularen Polyester in einem organischen Lösungsmittel aufzulösen und ihn aus dieser Lösung wieder durch Verdünnen mit einem den Polyester nicht lösenden zweiten organischen Lösungsmittel, das mit dem ersten Lösungsmittel mischbar ist, auszufällen. Die so erhaltene poröse, faserige Polyestermasse wird abfiltriert, getrocknet, anschließend zu kleinen Formkörpern gepreßt und diese dann in an sich bekannter Weise der Festphasenkondensation unterworfen.
Durch die große Oberfläche dieserTeilchen soll die Diffusion flüchtiger Komponenten innerhalb der Partikel erleichtert und ihre Abführung beschleunigt werden.
Dieses Verfahren ist jedoch für einen technischen Einsatz viel zu umständlich.
Aus der europäischen Patentanmeldung 207 856 ist ein Verfahren zur Herstellung von ultrahochmolekularem Polyester bekannt, bei dem die Nachkondensation eines relativ niedermolekularen Polyesters in einem organischen Wärmeübertragungsmittel ausgeführt wird.
Nach den Ausführungen in dieser Patentschrift (S. 4, Z. 27-30) ist ein Wärmeübertragungsmittel zu wählen, welches teilweise in das Polyesterteilchen eindringen kann und es zum Quellen bringt. Hierbei soll das Polykondensationsprodukt Glykol aus dem Polyesterteilchen schneller entfernt und so die Polykondensation erleichtert werden. Die flüchtigen Komponenten werden dann mit einem Inertgasstrom zusammen mit Teilen des Wärmeübertragungsmittels aus dem Reaktionsgemisch entfernt. Ein gravierender Nachteil bei diesem Verfahren ist jedoch, daß sich durch das Anquellen Wärmeübertragungsmittel in den Polyesterteilchen einlagert und durch einfaches Abwaschen nicht mehr entfernt werden kann. Außerdem wird die Struktur der eingesetzten Polyesterteilchen zerstört und es bildet sich viel Abrieb, der sich an den Wänden des Rührkessels anlagert. Ein weiterer Nachteil dieser bekannten Methode besteht darin, daß ein die Polyesterteilchen anquellendes Wärmeübertragungsmittel bei der Polykondensation in der Regel zu einer gelblichen Verfärbung des Polyesters führt.
Als Wärmeübertragungsöl werden bei diesem Verfahren aromatische Kohlenwasserstoffe und alicyclische Kohlenwasserstoffe, wie z.B. Diphenyl oder substituierte Diphenyle sowie Dicycloalkyle und Polycycloalkylene eingesetzt. Die nach diesem Verfahren hergestellten Produkte zeigen während der Kondensation in dem Wärmeübertragungsmittel eine hohe Verklebungstendenz, welche mit abnehmender Partikelgröße noch zunimmt.

Ein weiteres Verfahren zur Herstellung von hochmolekularen Polyestern durch Schmelzpolykondensation wird in der europäischen Patentanmeldung 181 498 beschrieben. Dort werden während der Umesterung langkettige, aliphatische $\alpha,\omega$-Dicarbonsäuren in den Polyester einkondensiert mit dem Ziel, daß diese langkettigen Dicarbonsäuren während der Polykondensationsphase cyclische Oligomere mit dem Glykol bilden sollen. Auf diese Weise soll der Dampfdruck des Glykols gesenkt und die Polykondensation beschleunigt werden. Nach den Angaben in dieser Patentanmeldung werden IV-Werte bis 2,35 dl/g erreicht. Ein gravierende Nachteil dieses Verfahrens besteht darin, daß mit zunehmendem Kondensationsgrad, d.h. steigendem Molekulargewicht des Polyesters, die Polyesterschmelze immer hochviskoser wird und man zum Rühren des Polykondensationsansatzes sehr große Energiemengen benötigt. Außerdem müssen für die Ausführung einer solchen Reaktion spezielle verstärkte Rührwerke und entsprechende Kesselanlagen eingesetzt werden. Werden Titanverbindungen als Polykondensationskatalysator bei diesem Verfahren eingesetzt, so findet eine starke Vergilbung des Polyesters statt.
Ferner wird bei diesem Verfahren ein großer Anteil der eingesetzten Mengen an $\alpha,\omega$-Alkandicarbonsäuren in den Polyester eingebaut und kann nicht mehr entfernt werden. Der so erhaltene Polyester hat daher auch einen gegenüber rein aromatischen Polyestern gleichen Kondensationsgrades herabgesetzten Schmelzpunkt. Es ist auch zu erwarten, daß durch den Einbau der langkettigen $\alpha,\omega$-Alkandicarbonsäuren auch anwendungsrelevante mechanische Eigenschaften des Polyestermaterials nachteilig beeinflußt werden.

Wegen der geschilderten Nachteile der bisher bekannten Verfahren zur Herstellung von hochmolekularen und ultrahochmolekularen Polyestern bestand nach wie vor das Bedürfnis nach einem technisch praktikablen Verfahren zur Herstellung derartiger Produkte, das die Nachteile der bisher bekannten Verfahren nicht oder wenigstens im verringerten Maße aufweist.
Insbesondere war es eine Aufgabe der vorliegenden Erfindung, ultrahochmolekulare Polyester herzustellen, ohne daß die Größe und Form der eingesetzten Teilchen verändert wird oder verändert werden muß. Dabei sollten möglichst keine Nebenreaktionen, die zur Vernetzung und zu unlöslichen Teilchen führen, ablaufen.

Die vorliegende Erfindung betrifft nun ein solches verbessertes Verfahren zur Herstellung eines hochmolekularen Polyesters durch Nachkondensation einer Suspension eines festen, feinteiligen Polyesters geringeren Molekulargewichts bei erhöhter Temperatur in einem flüssigen Wärmeübertragungsmittel. Im Gegensatz zu dem bekannten Verfahren wird beim erfindungsgemäßen jedoch ein Wärmeübertragungsmittel eingesetzt, welches zu weniger als 5 Gew-% in den Polyester eindringt und diesen nicht anquillt. Es hat sich nämlich überraschend herausgestellt, daß es - entgegen der Lehre des Standes der Technik - nicht erforderlich ist, ein Wärmeübertragungsmittel zur Feststoffkondensation des Polyesters einzusetzen, welches in den Polyester eindringt und dadurch flüchtige Bestandteile aus dem Polyesterteilchen extrahiert, sondern das es im Gegenteil viel vorteilhafter ist, ein Wärmeübertragungsmittel einzusetzen, welches in die Polyesterteilchen nicht eindringt und diese daher nicht zum Quellen bringt.

Erfindungsgemäß wird ein Inertgasstrom in die Polymersuspension eingeleitet oder über sie hinweggeleitet.

Von besonderer Bedeutung ist es, daß die erfindungsgemäße Nachkondensation in einer Suspension fester Polyesterteilchen erfolgt. Das heißt, daß die Temperatur der Polyestersuspension in dem Wärmeübertragungsöl unterhalb der Schmelztemperatur der Polyesterteilchen liegen muß. Es hat sich als besonders vorteilhaft erwiesen, die Nachkondensation bei einer Temperatur von 5 - 50°C vorzugsweise 10 bis 30°C, insbesondere 15 bis 20° unterhalb der Schmelztemperatur der Polyesterteilchen auszuführen.

In dem Maße, in dem die Polykondensation des Polyesters fortschreitet und sich damit seine Schmelztemperatur erhöht, kann auch die Temperatur der Polykondensation nach und nach gesteigert werden. Die zweckmäßigste Polykondensationstemperatur kann durch Vorversuche leicht ermittelt werden. Ebenso kann durch Probenahmen aus dem laufenden Ansatz leicht der aktuelle Schmelzpunkt des Polyestergranulats ermittelt werden und eine Nachführung der Polykondensationstemperatur innerhalb der oben angegebenen Grenzen erfolgen. Die Nachführung der Polykondensationstemperatur bringt den Vorteil, daß die Reaktion in kürzerer Zeit abgeschlossen werden kann.
Bei der Aufstellung eines Temperaturprogrammes für die Polykondensation ist jedoch auch zu berücksichtigen, daß bei sehr hohen Temperaturen ein thermischer Abbau des Polyesters einsetzen kann. Im Einzelfall ist es zweckmäßig für den nachzukondensierenden speziellen Polyester das optimale Temperaturprogramm durch Vorversuche zu ermitteln.

Von besonderer Bedeutung ist es auch, daß der Polyester in der Suspension in ausreichender feiner Verteilung vorliegt.

Je kleiner die Polyesterteilchen in der Suspension sind, umso schneller erfolgt der Molekulargewichtsanstieg.
Bei kleinen Partikeln, z.B. im Bereich von etwa 150 bis 180 µm, können niedermolekulare Kondensationsprodukte vermutlich schneller entweichen, als bei großen Partikeln, z.B. im Bereich von etwa 1000 bis 1400µm. Entsprechend verändert sich die Geschwindigkeit der Polykondensationsreaktion. Zweckmäßigerweise werden Polyesterteilchen eingesetzt deren Dimensionen zwischen 0,1 mm und etwa 3 mm liegen. Die im Einzelfall zweckmäßigste Größe hängt, außer von der gewünschten Molekulargewichtszunahme, auch noch von den vorhandenen Möglichkeiten der Zerkleinerung und der nach der Nachkondensation erforderlichen Abtrennung des Polyesters vom Wärmeübertragungsmittel ab. Als besonders zweckmäßig hat es sich erwiesen, Polyesterchips oder geschnittene Spinndrähte einzusetzen. Eine günstige Partikelgröße aus einem geschnittenen Spinndraht hat einen Durchmesser von ca. 0,2 bis 0,5 mm, beispielsweise 0,35 mm und eine Länge zwischen 1 und 5 mm, z.B. 3 mm.

Je nach der Kondensationstemperatur, Teilchengröße und anderen Reaktionsbedingungen erfolgt ein langsamerer oder schnellerer Anstieg des mittleren Molekulargewichts des Polyesters und damit seiner Intrinsic-Viscosity bis zu einem Plateau, bei dem praktisch kein weiterer Anstieg dieser Werte erreicht wird.

Je nach Temperaturprogramm und dem gewählten Wärmeübertragungsmittel liegt die Reaktionszeit bis zur Erreichung des Viskositätsplateaus zwischen etwa 10 und 40 Stunden. Beispielsweise erreicht man bei Polyäthylenterephthalatteilchen in Silikonöl als Wärmeübertragungsmittel bei 245° das Viskositätsplateau nach einer Kondensationszeit von ca. 30 Stunden.

Erfindungsgemäß können als Wärmeübertragungsmittel für die Polykondensation des Polyesters alle bei der Polykondensationstemperatur flüssigen inerten Medien eingesetzt werden, die die Bedingung erfüllen, daß sie unter den Kondensationsbedingungen zu weniger als 5 Gew-% in das Polyesterteilchen eindiffundieren und dieses somit nicht anquellen.

Die Auswahl geeigneter Wärmeübertragungsmittel kann leicht durch Vorversuche erfolgen, bei denen die Polyesterteilchen unter den üblichen Polykondensationsbedingungen in dem Warmeübertragungsmittel erwärmt und nach Ablauf der Kondensationszeit isoliert werden. Die isolierten Teilchen werden oberflächlich mit einem leicht flüchtigen Lösungsmittel abgewaschen und im Vakuum getrocknet. Anschließend kann durch eine Thermograviemetriebestimmung, bei der die Gewichtsabnahme der Teilchen bei Erwärmen auf Temperaturen von etwa 200 bis 300°C bestimmt wird, der Anteil des in die Polyesterteilchen eindiffunierten Wärmeübertragungsmittels festgestellt werden.

Für das erfindungsgemäße Verfahren eignen sich vorzugsweise solche Wärmeübertragungsmittel, die zu weniger als 1 % in die Polyesterpartikeln eindiffundieren, d.h. daß bei den in diesem Wärmeübertragungsmitteln polykondensierten Polyestermaterialien bei der Thermograviemetriebestimmung ein Gewichtsverlust von < 5%, vorzugsweise < 1 % eintritt.

Besonders gut eignen sich als Wärmeübertragungsmittel für das erfindungsgemäße Verfahren Silikonöle, die sich unzersetzt und ohne zu hohe Verdampfungsverluste auf die Polykondensationstemperatur, d.h. bis auf etwa 250°C erwärmen lassen. Silikonöle, die diese Bedingungen erfüllen, sind beispielsweise aus Bausteinen der Formel I aufgebaut:

(I) 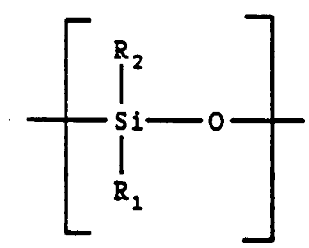

In diesen Formeln bedeuten

$R_1$ Alkyl mit mit 1 bis 10, vorzugsweise mit 1 bis 4 C-Atomen, Cycloalkyl mit 4 bis 8, vorzugsweise 5 oder 6 C-Atomen, Aryl mit 5 bis 14, vorzugsweise 5 bis 10 C-Atomen oder Aralkyl mit 6 bis 16, vorzugsweise 7 bis 12 C-Atomen,

$R_2$ gleich $R_1$ oder ein anderer Rest aus der Gruppe der für $R_1$ genannten Reste ist.

Eine besonders vorteilhafte Gruppe von Wärmeübertragungsmitteln bestehen aus Bausteinen der Formeln II und IIa

(II) 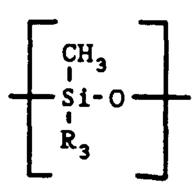 (IIa) 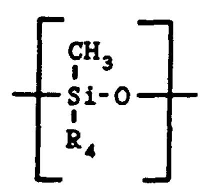

Darin bedeuten

| | |
|---|---|
| $R_3$ | Phenyl und |
| $R_4$ | Methyl oder aber |
| $R_3$ und $R_4$ | beide Methyl oder beide Phenyl. |

Wärmeübertragungsmittel der oben angegebenen Zusammensetzung sind im Handel erhältlich. Gut geeignete Wärmeübertragungsmittel dieser Stoffklasse sind Siliconöle mit Viscositäten von ca. 50 - 500 $mm^2/s$ (bei 25°C), Viscositäts-Temperatur-Koeffizienten von ca. 0,7 bis 0,85, Brechungsindices bei 25 °C von ca. 1,4 bis 1,51, Dichten von ca. 1 bis 1,11 (bei 25°C), Hitzebeständigkeit im offenen Tiegel bei 250°C von ca 500 bis 1500 Std. und einer Flüchtigkeit nach 2 Std im offenen Tiegel bei 250°C von ca 5 bis 1 %.
Gut geeignete Handelsprodukte sind beispielsweise die unter der Bezeichnung Wacker Siliconöle AP erhältlichen Phenyl-Methyl-Siliconöle.

Die Konzentration der Polyesterpartikel in der Suspension beträgt beim erfindungsgemäßen Verfahren zweckmäßigerweise 50 bis 500 g/l. Eine Steigerung der Partikelkonzentration kann in Einzelfällen erfolgen; in der Regel zeigt es sich jedoch, daß bei einer Steigung über diese Grenze hinaus das Rühren der Suspension erschwert und die Grenze des erreichen Molekulargewichts herabgesetzt wird. Ein Unterschreiten der angegebenen Konzentrationsuntergrenze bringt für die Umsetzung als solche keine Nachteile, vermindert aber die Ökonomie des Prozesses.
Vorzugsweise beträgt die Partikelkonzentration in der Suspension 100 bis 300 g/l. Der nach dem erfindungsgemäßen Verfahren erreichbare Wert der Intrinsic-Viscosity des Endprodukts zeigt eine gewisse Abhängigkeit von der Partikelkonzentration in der Suspension. Mit zunehmender Konzentration werden in der Regel unter sonst gleichen Bedingungen niedrigere Endviskositätswerte erreicht

Während der Polykondensation im Wärmeübertragungsmittel wird die Suspension zweckmäßigerweise so in Bewegung gehalten, daß die Konzentration der Polyesterpartikel überall etwa gleich ist. Diese Durchmischung der Suspension kann im Prinzip nach allen bekannten Verfahren erfolgen, beispielsweise dadurch, daß ein Gasstrom durch die Suspension hindurchgeleitet wird oder indem man sie rührt oder indem man mehrere derartige bekannte Verfahren miteinander kombiniert. Bevorzugt wird die Partikelsuspension durch Rühren in Bewegung gehalten. Auch die Rührgeschwindigkeit übt einen gewissen Einfluß auf die beim erfindungsgemäßen Verfahren erreichbare Endviskosität des Polyesters aus. Steigender Rührgeschwindigkeit führt unter sonst gleichen Bedingungen in der Regel zu einer gewissen Steigerung der Endviskosität.

Die Entfernung der leichtflüchtigen Kondensationsprodukte, niedere Alkohole, Glykole und gegebenenfalls etwas Wasser, aus dem Polykondensationsgemisch ist für die Einstellung des Polykondensationsgleichgewichts von besonderer Bedeutung.
Die Abführung dieser Reaktionsprodukte wird durch die schon erwähnte Spülung des Reaktionsraums mit einem, gegebenenfalls getrockneten, Inertgas gewährleistet.
In der Praxis werden die leichtflüchtigen Verbindungen zweckmäßigerweise durch einen Stickstoffstrom abgeführt, der entweder über den Reaktionsansatz geführt oder in ihn eingeleitet wird. Obwohl die Stärke des Stickstoffstroms normalerweise nur einen geringfügigen Einfluß auf die Höhe des erzielbaren Molekulargewichts ausübt, ist es zweckmäßig, eine gewisse Mindestströmung aufrecht zu erhalten. Für einen Ansatz von etwa 1l Suspension hat sich ein Stickstoffstrom von etwa 50 bis 250 l/h als brauchbar erwiesen.

Als Ausgangs-Polyester zur Polykondensation nach dem erfindungsgemäßen Verfahren eignen sich grundsätzlich alle Polyestermaterialien, die durch Festphasenkondensation zu hohen Molekulargewichten nachkondensiert werden können. In besonderem Maße eignen sich solche Polyester, die in der Polymerkette aromatische Reste enthalten, wie zum Beispiel Polyester, die aus

0 bis 100 Mol.-% Baugruppen der Formel III

(III) 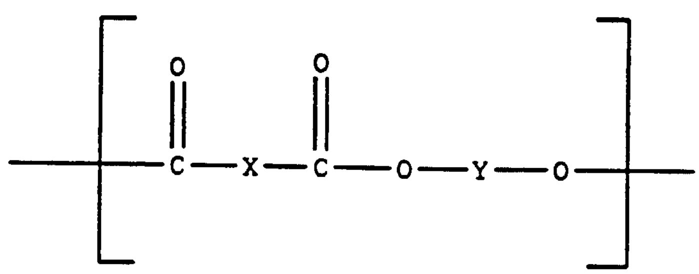

und 100 bis 0 Mol.-% Baugruppen der Formel IV

(IV)

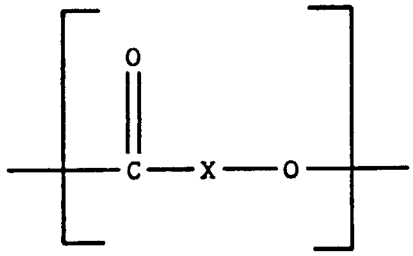

aufgebaut sind, worin

X zu mehr als 75 Mol.-% aromatische Reste mit 5 bis 16, vorzugsweise 6 bis 12 C-Atomen und maximal 25 Mol.-% aliphatische Reste mit 4 bis 10 Kohlenstoffatomen, vorzugsweise 6 bis 8 Kohlenstoffatomen,
Y zu mindestens 85 Mol.-% Alkylen oder Polymethylengruppen mit 2 bis 4 Kohlenstoffatomen und zu maximal 15 Mol.-% längerkettige Polymethylen oder Alkylengruppen, vorzugsweise mit bis zu 8 Kohlenstoffatomen sowie zweiwertige Reste, die sich von Diglykol, Triglykol oder Polyglykol ableiten.

Zweckmäßigerweise werden solche Ausgangs-Polyester eingesetzt, die eine intrinsische Viskosität von 0,3 bis 0,6 dl/g, gemessen in Dichloressigsäure bei 25°C wie unten beschrieben, aufweisen.

Vorzugsweise enthalten Polyester, die Baugruppen der Formel IV enthalten, 70 bis 100 Mol.-% ,insbesondere 85 bis 100 Mol.-%, Baugruppen der Formel III und 0 bis 30 Mol.-%, insbesondere 0 bis 15 Mol.-%, Baugruppen der Formel IV.

Bevorzugt sind Polyester, in denen X mindestens 95 Mol.-% aromatische und maximal 5 Mol.-% aliphatische Reste bedeuten, insbesondere aber solche, in denen X ausschließlich für aromatische Reste steht.

Bevorzugte aromatische Reste, für die X steht, sind 1,4- und 1,3-Phenylen, 1,4-, 1,5-, 1,8-, 2,6- und 2,7-Naphthylen, 4,4'-Biphenylen, Furylen und Reste der Formel

(V)

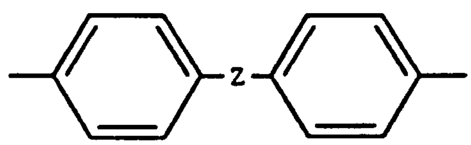

worin
Z Polymethylen oder Alkylen mit 1 bis 4 Kohlenstoffatomen, $-SO_2-$, -COO-, -O-oder -S- bedeutet.

Die aromatischen Reste können ihrerseits noch einen oder zwei Substituenten tragen. In diesem Fall ist es jedoch bevorzugt, daß nur ein Anteil von bis zu 15 %, insbesondere von bis zu 7 % der vorhandenen aromatischen Reste substituiert ist. Vorzugsweise tragen die substituierten aromatischen Reste jeweils nur einen Substituenten. Besonders geeignete Substituenten sind Alkyl mit 1 bis 4 C-Atomen, Alkoxy mit 1 bis 4 C-Atomen, Chlor und die Sulfogruppe

Reste, die sich von aliphatischen Dicarbonsäuren ableiten, und aromatische Reste, die gewinkelte Ketten liefern, beispielsweise Isophthalsäurereste, oder die sperrigere aromatische Kerne, wie den Naphthalinkern aufweisen, sowie die längerkettigen, für Y stehenden Baugruppen werden insbesondere dann in die Polyesterkette eingebaut, wenn eine Modifizierung der Eigenschaften des Polyesters erwünscht ist.
Bevorzugt sind Polyester, die weniger als 7 % dieser modifizierend wirkenden Komponenten enthalten.

Eine Gruppe bevorzugter Polyester entspricht der Formel VI

(VI)

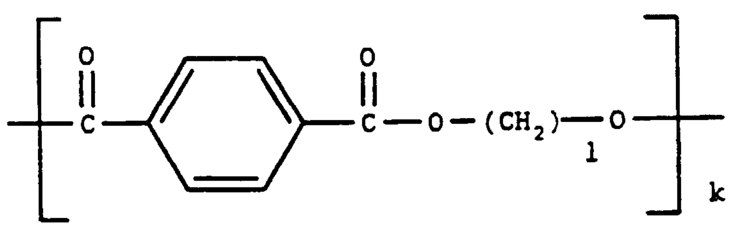

worin l eine Zahl von 2 bis 6 und k eine Zahl über 10 ist.

Ein besonders bevorzugter Polyester, der nach dem erfindungsgemäßen Verfahren zu besonders hohen Molekulargewichten polykondensiert werden kann, ist reines Polyäthylenterephthalat sowie Polyethylenterephthalat, das durch Einbau von bis zu 10 Mol.-% anderer Bausteine aus den oben genannten Gruppen so modifiziert worden ist, daß bestimmte Gebrauchseigenschaften erhalten werden, wie z.B. Polyethylenterephthalat,
das durch Einbau von Sulfogruppen enthaltenden Bausteinen (z.B. Sulfoisophthalsäure) eine Affinität zu basischen Farbstoffen erhalten hat oder das durch Einbau von Resten von Phosphinsäurederivaten, z.B. solchen der Formeln

VII 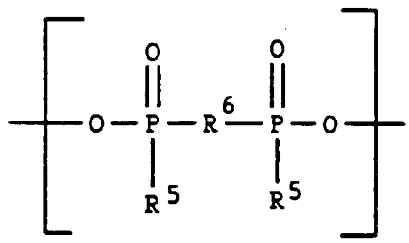 und VIII 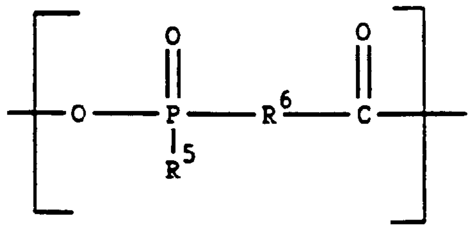

worin $R^5$ vorzugsweise Niederalkylreste und $R^6$ vorzugsweise Alkylen oder Polymethylen mit 1 bis 6 Kohlenstoffatomen ist,
schwerbrennbar ist.

Die als Ausgangsmaterialien für das erfindungsgemäße Verfahren eingesetzten niedermolekularen Polyester können aus den entsprechenden Ausgangsmaterialien in an sich bekannter Weise nach allen bisher bekannten Herstellungsverfahren insbesondere durch direkte Veresterung der Dicarbonsäuren mit den Diolen oder durch Umesterung von Dicarbonsäureniederalkylestern, z.B. der Dicarbonsäuredimethylester, mit den entsprechenden Diolen erhalten werden.

Auch die bei der herkömmlichen Polyesterherstellung eingesetzten Katalysatoren wie Veresterungs- und Umesterungskatalysatoren können zur Herstellung der niedermolekularen Ausgangspolyester für das erfindungsgemäße Verfahren benutzt werden. Das gleiche gilt für die bei der Polykondensation eingesetzten Polykondensationskatalysatoren. Die Art dieser Katalysatoren hat im allgemeinen wenig Auswirkungen auf die Höhe des beim erfindungsgemäßen Verfahren erreichbaren Endmolekulargewichts (Endviskosität); lediglich bei Einsatz von Zinnacetat als Polykondensationskatalysator werden unter sonst gleichen Bedingungen in der Regel etwas höhere Endmolekulargewichte, d.h. auch höhere Endviskosität erreicht, als beim Einsatz anderer Polykondensationskatalysatoren.

Die niedermolekularen Polyestermaterialien sollten vor der erfindungsgemäßen Polykondensation gut getrocknet werden. Zweckmäßigerweise erfolgt die Trocknung bei 110 bis 190°C in an sich bekannter Weise, wobei jedoch darauf geachtet werden sollte, daß während der Trocknung keine zu hohe Kristallinität der Polyesterpartikel eintritt.
Trocknungstemperaturen außerhalb der angegebenen Grenzen bringen in der Regel keine Vorteile, können aber in speziellen Fällen zweckmäßig sein. Insbesondere die Trocknung unterhalb von 110° und gegebenenfalls im Vakuum kann Vorteile bieten, wenn es zweckmäßig erscheint, eine Zunahme der Kristallinität möglichst zu vermeiden.

Die Kristallinität kann im Bedarfsfall in an sich bekannter Weise entweder durch eine röntgenographische Untersuchung oder durch Bestimmung der Dichte der Polyesterpartikel, zweckmäßigerweise in einer Gradientenkolonne, die z.B. mit Zinkchloridlösung nach oben abnehmender Konzentration beschickt ist, bestimmt werden.

Ein wichtiges Kriterium für die Durchführung des erfindungsgemäßen Verfahrens ist der Einsatz eines Ausgangspolyesters mit einer ausreichenden Konzentration von freien Endcarboxylgruppen. Gut geeignet sind Ausgangspolyester, die zwischen 10 und 40 mmol/kg, vorzugsweise 20 bis 30 mmol/kg Carboxylendgruppen aufweisen. Das optimale OH/COOH-Verhältnis für Ausgangspolyester bei der erfindungsgemäßen Feststoffkonzentration liegt im Bereich von 1,5 bis 4,5.

Das erfindungsgemäße Verfahren eröffnet einen auch technisch gut gangbaren Weg zur Herstellung von Polyester mit sehr hohen Molekulargewichten und entsprechend hohen Intrinsic-Viskositäten. Die intrinsische Viskosität ist bekanntlich der Grenzwert des Quotienten aus der spezifischen Viskosität und der Konzentration bei einer gegen Null gehenden Konzentration:

$$[\eta] = \lim_{c \to 0} \frac{\eta_{spez}}{c}$$

Die spezifischen Viskositäten, die zur Berechnung der intrinsichen Viskosität gemäß der obigen Formel erforderlich sind, wurden in Dichloressigsäure bei 25°C bestimmt. Bei der Messung ist darauf zu achten und sicherzustellen, daß auch hochkristalline Polyester bzw. hochkristalline Anteile der Polyester vollständig gelöst sind.

Die erfindungsgemäß hergestellten hochmolekularen Polyester weisen gegenüber herkömmlich hergestellten Produkten eine schmalere Molekulargewichtsverteilung auf. Insbesondere enthalten die Produkte keine oder nur sehr geringe Mengen unlöslicher Anteile. Zur Bestimmung der Molekulargewichtsverteilung kann die Gelchromatographie eingesetzt werden. Die hierbei verwendete GPC-Apparatur besteht aus einer Pumpe, einem UV-Detektor und 10 µ - (R)Styragel-Säulen (500, $10^3$, $10^4$, $10^5$, $10^6$, Å). Als Elutionsmittel wurde Chloroform/HFIP (98:2 Vol%) benutzt. Die Kalibrierung erfolgt in an sich bekannter Weise mit Polyäthylenterephthalatstandards. (Eine dedaillierte Beschreibung dieses Verfahrens findet sich in dem Aufsatz von K. Weisskopf, Characterization of Polyethylene Terephthalate by Gel Permeation Chromatographie (GPC) in Journal of Polymer Science, Part A, Chemistry, Vol 26, (1988), Seite 1920 ff.)

Die Bestimmung der unlöslichen Anteile der erfindungsgemäß hergestellten hochmolekularen Polyester erfolgt durch Auflösung von 6 g des zu untersuchenden Polyesters in 100 ml Trifluoressigsäure/Dichlorethan (TFE/DE) (1:1) bei 25°C, wobei das Material 6 Stunden lang bei 150 bis 200 U/min im Lösungsmittel gerührt wird. Danach wird die Lösung durch eine Glasfritte (20 bis 30 µ) filtriert. Das auf der Fritte zurückbleibende unlösliche Material wird mit Chloroform gewaschen und bei 130°C 24 Stunden lang getrocknet.

Bei der Untersuchung der erfindungsgemäß hergestellten Polyester nach der von K. Weisskopf in Journal of Applied Polymer Science, Vol. 39, 2141-2152 (1990) beschriebenen Methode zur Untersuchung von verzweigtem Polyethylenterephthalat lassen sich darin keine Verzweigungen nachweisen. Dies zeigt, daß diese Produkte weitestgehend linear sind. Weitere Vorteile des erfindungsgemäßen Verfahrens sind die Möglichkeit, in technischer Größenordnung Polyestermaterialien mit Intrinsic-Viskositäten bis über 2,0 dl/g herzustellen, daß dies in kürzerer Zeit möglich ist, als nach herkömmlichen Verfahren und daß die Homogenität der nach dem erfindungsgemäßen Verfahren feststoffkondensierten Polyesterpartikel weitaus besser ist, als nach der herkömmlichen Feststoffpolymerisation. Der Einsatz von Silikonöl als Wärmeübertragungsmittel hat den weiteren Vorteil, daß man aus dem kommerziellen Angebot dieser Verbindungsklasse diejenigen auswählen kann, deren Siedepunkt so hoch liegt, daß im Verlauf des Polykondensationsverfahrens kein wesentlicher Lösungsmittelverlust durch Verdampfen eintritt und weiterhin darin, daß sich in den Silikonölen die niedermolekularen flüchtigen Produkte der Polykondensationsreaktion nicht anreichern und somit das Silikonöl nach dem Abtrennen des polykondensierten Polyesters - in der Regel ohne weitere Aufarbeitung - wieder für den nächsten Polykondensationsansatz benutzt werden kann.

Das erfindungsgemäße Verfahren wird anhand der folgenden Ausführungsbeispiele veranschaulicht.

Beispiele 1 bis 6

In den folgenden 6 Ansätzen wurden jeweils 60 g Polyethylenterephthalat-Partikel in 300 ml Wacker Silikonöl AP 500 eingesetzt. Die Polyesterpartikel waren Zylinder mit 0,35 mm Durchmesser und einer Länge von 3 mm, die hergestellt wurden durch Schneiden entsprechender Polyestermonofilamente. Die intrinsische Viskosität des eingesetzten Polyestermaterials betrug 0,6 dl/g, der Carboxylendgruppengehalt betrug 23 mmol/kg und das OH/COOH-Verhältnis lag bei 2,87.

Die Polykondensationen wurden im 2 l Vierhalskolben mit Rührer (250 U/min) Kontaktthermometer zur Steuerung der Innentemperatur und Gaseinleitungsrohr durchgeführt. Als Trägergas wurde trockener Stickstoff eingesetzt. Die Polyestersuspension wurde innerhalb 0,75 Std. auf die jeweilige Polykondensationstemperatur (PK-Temperatur) erwärmt.

Bei den Versuchen wurde die Polykondensationstemperatur, die Polykondensationsdauer und die Stärke des Stickstoffstroms variiert. Die entsprechenden Daten sind in der folgenden Tabelle 1 angegeben. In der letzten Spalte dieser Tabelle finden sich die IV-Werte der bei den Versuchen erhaltenen hochmolekularen Polyester. Die Versuche 1 und 2 zeigen die gute Reproduzierbarkeit des erfindungsgemäßen Verfahrens.

TABELLE 1

| Versuch | PK-Temp. °C | PK-Zeit h | N2-strom l/h | IV(GPC) dl/g | IV(DCE) dl/g | ULB* g |
|---|---|---|---|---|---|---|
| 1 | 240 | 7,25 | 120 | 1,51 | 1,51 | 0 |
| 2 | 240 | 7,25 | 120 | 1,57 | --- | 0 |
| 3 | 245 | 7,25 | 250 | 1,66 | 1,69 | 0 |
| 4 | 245 | 7,25 | 120 | 1,66 | 1,59 | 0 |
| 5 | 245 | 15,25 | 120 | 1,90 | 1,84 | 0 |
| 6 | 245 | 23,25 | 120 | 2,05 | 2,02 | 0 |

* ULB = Unlösliche Bestandteile

Die nach dem erfindungsgemäßen Verfahren erzielbere schmale Molekulargewichtsverteilung zeigt sich an dem Quotienten $M_W/M_N$, der für die Produkte der Beispiele 1 und 2 jeweils einen Wert von 3,42 hat.

Vergleichsbeispiel

Zum Vergleich wurden 60 g Polyethylenterephthalat-Partikel in 300 ml hydriertem terphenyl als Wärmeübertragungsmittel polykondensiert. Die Polyesterpartikel waren wie in den Beispielen 1-6 Zylinder mit 0,35 mm Durchmesser und einer Länge von 3 mm, und bestanden aus dem gleichen Material, das bei den Beispielen 1-6 eingesetzt wurde. Die Polykondensationen wurden im 2 Vierhalskolben mit Rührer (250 U/min) Kontaktthermometer zur Steuerung der Innentemperatur und Gaseinleitungsrohr durchgeführt. Als Trägergas wurde trockener Stickstoff in einer Menge von 120 l/h eingesetzt. Die Polyestersuspension wurde innerhalb 0,75 Std. auf die Polykondensationstemperatur von 240°C erwärmt und die Polykondensationsdauer betrug 7,25 Stunden.
Das so erhaltene Produkt hatte eine $IV_{GPC}$ von 1,35 und einen $M_W/M_N$ - Wert von 4,70.

**Patentansprüche**

**1.** Verfahren zur Herstellung eines hochmolekularen Polyesters durch Nachkondensation einer Suspension eines festen, feinteiligen Polyesters geringeren Molekulargewichts bei erhöhter Temperatur in einem flüssigen Wärmeübertragungsmittel, dadurch gekennzeichnet, daß ein Inertgasstrom in die Polyestersuspension eingeleitet oder über sie hinweggeleitet wird und ein Wärmeübertragungsmittel eingesetzt wird, das zu weniger als 5 Gew.-% in die Polyesterpartikel eindringt.

**2.** Verfahren gemäß Anspruch 1, dadurch gekennzeichnet, daß als Wärmeübertragungsmittel ein Silikonöl, das aus Bausteinen der Formel I aufgebaut ist,

(I) 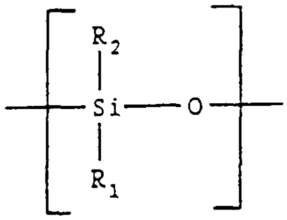

eingesetzt wird,
wobei

$R_1$ Alkyl mit 1 bis 10, vorzugsweise mit 1 bis 4 C-Atomen, Cycloalkyl mit 4 bis 8, vorzugsweise 5 oder 6 C-Atomen, Aryl mit 5 bis 14, vorzugsweise 5 bis 10 C-Atomen oder Aralkyl mit 6 bis 16, vorzugsweise 7 bis 12 C-Atomen,

$R_2$ gleich $R_1$ oder ein anderer Rest aus der Gruppe für $R_1$ genannten Reste ist.

**3.** Verfahren gemäß mindestens einem der Ansprüche 1 und 2, dadurch gekennzeichnet, daß als Wärmeübertragungsmittel ein Silikonöl, das aus Bausteinen der Formeln II und IIa aufgebaut ist,

(II) 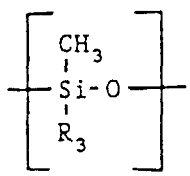 (IIa) 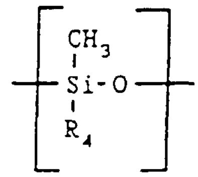

eingesetzt wird,
worin

| | |
|---|---|
| $R_3$ | Phenyl und |
| $R_4$ | Methyl oder aner |
| $R_3$ und $R_4$ | beide Methyl oder beide Phenyl sind. |

**4.** Verfahren gemäß mindestens einem der Ansprüche 1 bis 3, dadurch gekennzeichnet, daß ein Polyester eingesetzt wird, der aus 0 bis 100 Mol.-% Baugruppen der Formel III

(III) 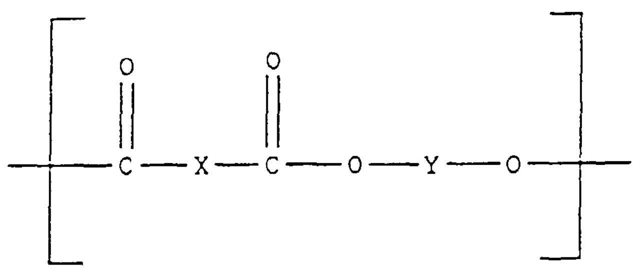

und 100 bis 0 Mol.-% Baugruppen der Formel IV

(IV) 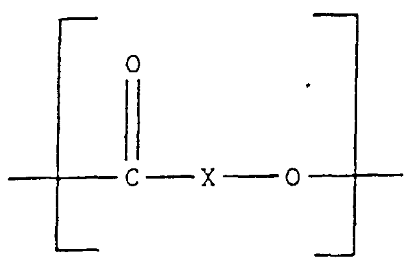

aufgebaut ist,worin

X zu mehr als 75 Mol.-% aromatische Reste mit 5 bis 16, vorzugsweise 6 bis 12 C-Atomen und maximal 25 Mol.-% aliphatische Reste mit 4 bis 10 Kohlenstoffatomen, vorzugsweise 6 bis 8 Kohlenstoffatomen,

Y zu mindestens 85 Mol.-% Alkylen oder Polymethylengruppen mit 2 bis 4 Kohlenstoffatomen und zu maximal 15 Mol.-% längerkettige Polymethylen oder Alkylengruppen, vorzugsweise mit bis zu 8 Kohlenstoffatomen sowie zweiwertige Reste, die sich von Diglykol, Triglykol oder Polyglykol ableiten.

**5.** Verfahren gemäß mindestens einem der Ansprüche 1 bis 4, dadurch gekennzeichnet, daß ein Polyester der Formel VI

(VI) 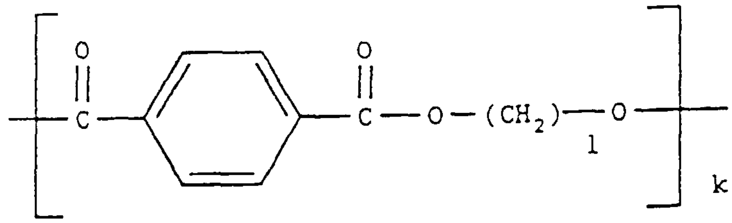

eingesetzt wird, worin l eine Zahl von 2 bis 6 und k eine Zahl über 10 ist.

6. Verfahren gemäß mindestens einem der Ansprüche 1 bis 5, dadurch gekennzeichnet, daß der Polyester Polyäthylenterephthalat ist.

7. Verfahren gemäß mindestens einem der Ansprüche 1 bis 6, dadurch gekennzeichnet, daß die Nachkondensation bei einer Temperatur ausgeführt wird, die jeweils 5 bis 50°C unter dem jeweiligen Schmelzpunkt des Polyesters liegt.

8. Verfahren gemäß mindestens einem der Ansprüche 1 bis 7, dadurch gekennzeichnet, daß die Nachkondensation unter Rühren ausgeführt wird.

**Claims**

1. A process for the preparation of a high molecular weight polyester by post-condensation of a suspension of a solid, finely divided polyester of lower molecular weight at elevated temperature in a liquid heat transfer medium, which comprises passing a stream of inert gas into or over the polyester suspension and employing a heat transfer medium which penetrates into the polyester particles to a degree of less than 5% by weight.

2. The process as claimed in claim 1, wherein a silicone oil which is built up from units of the formula I

(I) 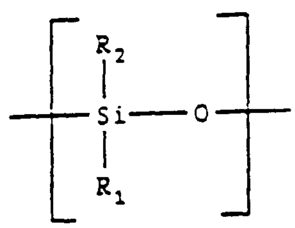

wherein

$R_1$ is alkyl having 1 to 10, preferably 1 to 4 carbon atoms, cycloalkyl having 4 to 8, preferably 5 or 6 carbon atoms, aryl having 5 to 14, preferably 5 to 10 carbon atoms or aralkyl having 6 to 16, preferably 7 to 12 carbon atoms and

$R_2$ is $R_1$ or another radical from the group of radicals mentioned for $R_1$,

is employed as the heat transfer medium.

3. The process as claimed in at least one of claims 1 and 2, wherein a silicone oil which is built up from units of the formulae II and IIa

(II) 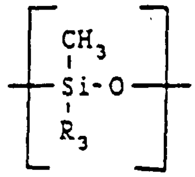 (IIa) 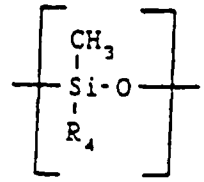

wherein

- $R_3$ is phenyl and
- $R_4$ is methyl, or
- $R_3$ and $R_4$ are both methyl or both phenyl is employed as the heat transfer medium.

**4.** The process as claimed in at least one of claims 1 to 3, wherein a polyester is employed which is built up from 0 to 100 mol% of structural groups of the formula III

(III) 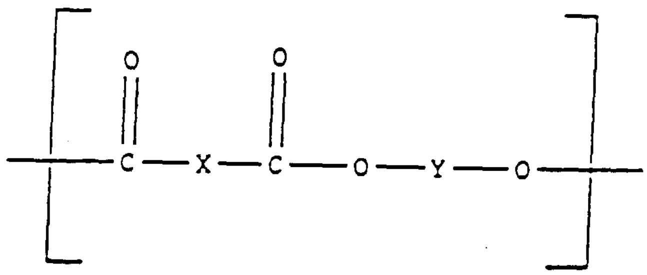

and 100 to 0 mol% of structural groups of the formula IV

(IV) 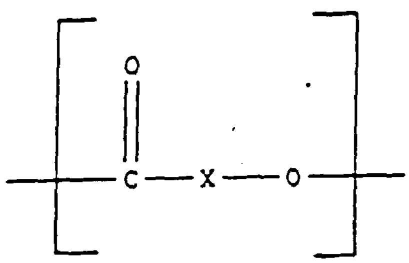

in which

- X is, to the extent of more than 75 mol%, aromatic radicals having 5 to 16, preferably 6 to 12, carbon atoms and, to the extent of not more than 25 mol%, aliphatic radicals having 4 to 10 carbon atoms, preferably 6 to 8 carbon atoms, and
- Y is, to the extent of at least 85 mol%, alkylene or polymethylene groups having 2 to 4 carbon atoms and, to the extent of not more than 15 mol%, longer-chain polymethylene or alkylene groups, preferably having up to 8 carbon atoms, and divalent radicals which are derived from diglycol, triglycol or polyglycol.

**5.** The process as claimed in at least one of claims 1 to 4, wherein a polyester of the formula VI

(VI) 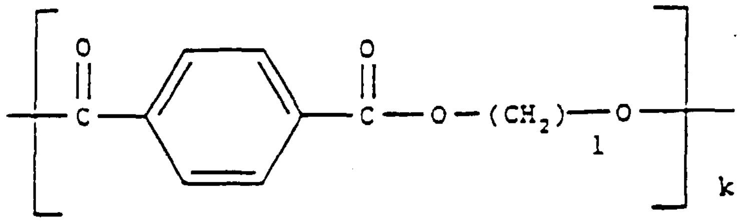

in which 1 is a number from 2 to 6 and k is a number above 10, is employed.

6. The process as claimed in at least one of claims 1 to 5, wherein the polyester is polyethylene terephthalate.

7. The process as claimed in at least one of claims 1 to 6, wherein the post-condensation is carried out at a temperature which is in each case 5 to 50°C below the particular melting point of the polyester.

8. The process as claimed in at least one of claims 1 to 7, wherein the post-condensation is carried out with stirring.

**Revendications**

1. Procédé pour préparer un polyester à grande masse moléculaire par recondensation d'une suspension d'un polyester solide finement divisé ayant une plus petite masse moléculaire, à haute température, dans un caloporteur liquide, caractérisé en ce qu'on introduit un courant d'un gaz inerte dans la suspension de polyester, ou on la fait passer par-dessus, et on utilise un caloporteur qui pénètre dans les particules de polyester en une quantité inférieure à 5 % en poids.

2. Procédé selon la revendication 1, caractérisé en ce qu'on utilise comme caloporteur une huile de silicone constituée de motifs de formule I

(I) 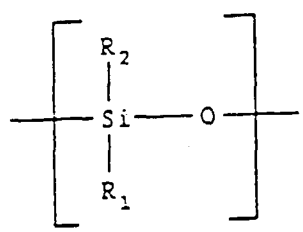

dans laquelle

$R_1$ est un radical alkyle ayant de 1 à 10 et de préférence de 1 à 4 atomes de carbone, cycloalkyle ayant de 4 à 8 et de préférence 5 ou 6 atomes de carbone, aryle ayant de 5 à 14 et de préférence de 5 à 10 atomes de carbone, ou aralkyle ayant de 6 à 16 et de préférence de 7 à 12 atomes de carbone,
$R_2$ est identique à $R_1$ ou est un autre radical choisi parmi l'ensemble des radicaux mentionnés pour $R_1$.

3. Procédé selon au moins l'une des revendications 1 et 2, caractérisé en ce qu'on utilise comme caloporteur une huile de silicone constituée de motifs de formule II et IIa

(II) 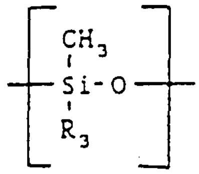 (IIa) 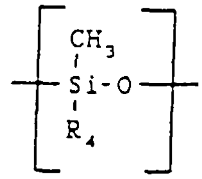

dans laquelle

$R_3$ est le radical phényle, et
$R_4$ est le radical méthyle, ou bien
$R_3$ et $R_4$ sont tous les deux des groupes méthyle ou tous les deux des groupes phényle.

**4.** Procédé selon au moins l'une des revendications 1 à 3, caractérisé en ce qu'on utilise un polyester constitué de 0 à 100 % en moles de motifs de formule III

(III) 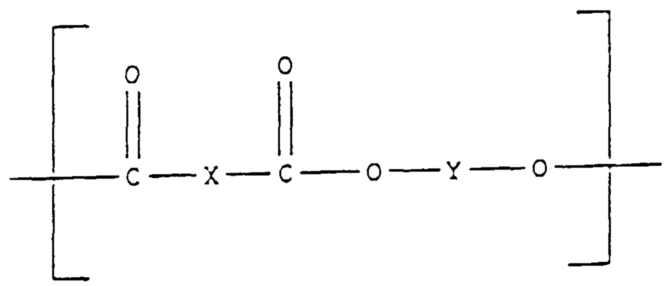

et de 100 à 0 % en moles de motifs de formule IV

(IV) 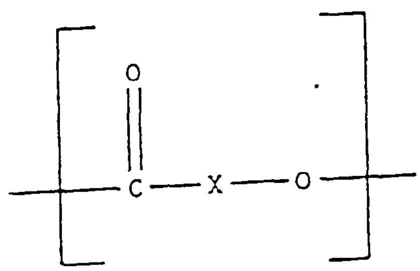

dans lesquels

X est constitué pour plus de 75 % en moles de radicaux aromatiques ayant de 5 à 16 et de préférence de 6 à 12 atomes de carbone, et pour un maximum de 25 % en moles de résidus aliphatiques ayant de 4 à 10 atomes de carbone et de préférence de 6 à 8 atomes de carbone,
Y est constitué pour au moins 85 % en moles d'alkylène ou de groupes polyméthylène ayant de 2 à 4 atomes de carbone, et pour un maximum de 15 % en moles de polyméthylène à longue chaîne ou de groupes alkylène, ayant de préférence jusqu'à 8 atomes de carbone, ainsi que de résidus divalents qui dérivent du diglycol, du triglycol ou du polyglycol.

**5.** Procédé selon au moins l'une des revendications 1 à 4, caractérisé en ce qu'on utilise un polyester de formule VI

(VI) 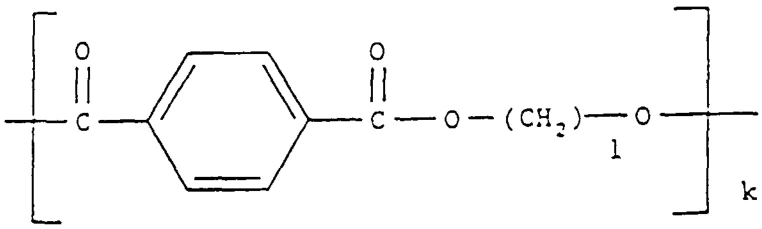

dans laquelle 1 est un nombre de 2 à 6 et k est un nombre supérieur à 10.

**6.** Procédé selon au moins l'une des revendications 1 à 5, caractérisé en ce que le polyester est le poly(téréphtalate d'éthylène).

**7.** Procédé selon au moins l'une des revendications 1 à 6, caractérisé en ce que la recondensation est mise en oeuvre à une température qui est de 5 à 50°C inférieure au point de fusion du polyester.

**8.** Procédé selon au moins l'une des revendications 1 à 7, caractérisé en ce que la recondensation est mise en oeuvre sous agitation.